# EUROPÄISCHE PATENTSCHRIFT

(11) **EP 3 288 809 B1**
(45) Veröffentlichungstag und Bekanntmachung des Hinweises auf die Patenterteilung: **09.06.2021**
(21) Anmeldenummer: 16720715.8
(22) Anmeldetag: 29.04.2016
(51) Int. Cl.: B60W 30/14, B60W 30/18, B60W 30/16

(54) **VERFAHREN UND EINRICHTUNG ZUR GESCHWINDIGKEITSREGULIERUNG EINES FAHRZEUGS**
METHOD AND DEVICE FOR REGULATING THE SPEED OF A VEHICLE
PROCÉDÉ ET DISPOSITIF DE RÉGULATION DE LA VITESSE D'UN VÉHICULE

(30) Priorität: 29.04.2015 DE 102015106575
(43) Veröffentlichungstag der Anmeldung: 07.03.2018
(73) Patentinhaber: KNORR-BREMSE Systeme für Nutzfahrzeuge GmbH, 80809 München (DE)
(72) Erfinder: KRABOT, Mátyás, 2310 Szigetszentmilklós (HU); DUQUE VELEZ, Simon Felipe, 1053 Budapest (HU)
(86) Internationale Anmeldenummer: PCT/EP2016/000695
(87) Internationale Veröffentlichungsnummer: WO 2016/173717

(56) Entgegenhaltungen:
- WO-A1-2011/157251
- DE-A1-102004 060 432
- DE-A1-102005 045 386
- DE-A1-102008 029 124
- US-A1- 2003 204 299

## Beschreibung

Die vorliegende Erfindung betrifft ein Verfahren und eine Einrichtung zur Geschwindigkeitsregulierung eines Fahrzeugs, das über einen Tempomaten zur Geschwindigkeitseinsteuerung und über Sensorik auf Basis elektromagnetischer Strahlung zur Umgebungserkennung verfügt.

Die Sensorik dient dabei vornehmlich der Analyse des Fahrwegs des Fahrzeugs, beispielsweise um Hindernisse im Fahrweg, Spurwechsel und Eigenschaften der Straße zu erkennen. Die Ausgangssituation des Verfahrens entsteht durch die Schritte, dass eine Vorgabegeschwindigkeit durch den Fahrer definiert wird, und durch den Tempomaten eine gegenüber der Vorgabegeschwindigkeit reduzierte Sicherheitsgeschwindigkeit eingesteuert wird, beispielsweise aufgrund eines vorausfahrenden Fahrzeugs, und ein Spurwechsel des Fahrzeugs erkannt wird.

Das Einsatzgebiet der Erfindung erstreckt sich insbesondere auf für den Fernverkehr vorgesehene Kraftfahrzeuge, die über einen Tempomaten zur Geschwindigkeitsregulierung und über Sensorik zur Wahrnehmung der Umgebung zwecks dynamischer oder adaptiver Anpassung der Geschwindigkeitsregulierung verfügen. Die Vorgabegeschwindigkeit wird dabei im Allgemeinen durch den Fahrer definiert. Ein Spurwechsel wird beispielsweise durch optische Erfassung der Fahrbahn mittels einer Kamera und auf die Erkennung der Fahrbahnmarkierung gerichteter Bildanalyse festgestellt.

Eine typische Situation beim Betrieb eines solchen Fahrzeugs besteht darin, dass durch einen Radar ein vorausfahrendes Hindemisfahrzeug erkannt wird, und durch einen Abstandsregeltempomaten die Geschwindigkeit an das vorausfahrende Hindernisfahrzeug angepasst wird, so dass mit einer gegenüber der vordefinierten Vorgabegeschwindigkeit reduzierten Sicherheitsgeschwindigkeit gefahren wird. Verschwindet dann das vorausfahrende Hindernisfahrzeug als Hindernis, wird durch den Abstandsregeltempomaten wieder die Vorgabegeschwindigkeit eingesteuert. Das Hindernisfahrzeug kann beispielsweise verschwinden, weil es beschleunigt, abbiegt, oder weil das verfolgende Fahrzeug abbiegt, die Spur wechselt und/oder das Hindernisfahrzeug überholt.

Insbesondere kann es sein, dass das verfolgende Fahrzeug auf eine Spur wechselt, die zu einer Ausfahrt oder Abfahrt von der jeweiligen Schnellstraße oder Fernstraße, also beispielsweise Autobahn oder Kraftfahrbahn, führt. Auf solchen Ausfahrten muss die Geschwindigkeit des Fahrzeugs unter die auf der Fernstraße übliche Vorgabegeschwindigkeit gesenkt werden. Daher kann es hier nachteilhafterweise dazu kommen, dass der Abstandsregeltempomat das Fahrzeug zunächst kurzzeitig wieder beschleunigt, da kein Hindernis mehr vorhanden ist, wobei das Fahrzeug aber kurz danach, spätestens in einer Kurve der Ausfahrt, durch ein weiteres Fahrerassistenzsystem oder durch den Fahrer, wieder abgebremst werden muss. Dies bedeutet zum einen, dass Treibstoff oder Bremsen unnütz verbraucht beziehungsweise verschlissen werden, und erfordert zum anderen gegebenenfalls einen zusätzlichen, für den Fahrer unbequemen Eingriff in die Geschwindigkeitsregulierung.

Aus der US 7 260 465 B2 geht ein Verfahren zur Geschwindigkeitsregulierung hervor, bei dem mittels eines Navigationssystems, welches über ein Ortungssystem wie beispielsweise GPS und Kartenmaterial verfügt, durch Abgleich der mittels GPS festgestellten Position und von auf der Karte vermerkten Koordinaten von Ausfahrten oder Abfahrten festgestellt wird, ob das Fahrzeug im Begriff ist, auf eine solche Ausfahrt abzubiegen. Falls dies der Fall ist, und falls zuvor ein Abstandsregeltempomat die Geschwindigkeit aufgrund eines Hindernisses gedrosselt hatte, wird eine Beschleunigung des Fahrzeugs verhindert, auch wenn der Abstandsregeltempomat diese nach Verschwinden des Hindernisses durch einen Spurwechsel wieder freigibt, um eine unnötige kurzzeitige Beschleunigung zu vermeiden.

Nachteilhaft an diesem Verfahren ist unter anderem, dass dieses auf gespeichertem Kartenmaterial basiert, welches unvollständig oder fehlerhaft sein kann. Außerdem stützt sich das Verfahren auf die Verwendung von GPS oder anderen Satellitenortungssystemen, welche beispielsweise in Tunneln nicht oder nur eingeschränkt funktionieren.

Aus der US 2003/204299A1 ist ein Verfahren bekannt, bei welchem ein Tempomat, sowie in Fahrtrichtung gerichtete Sensoren eingesetzt werden, um Beschleunigungen in Ausfahrten vollständig zu unterdrücken, was aber im Fahrbetrieb kritisch sein kann. Aus der WO 2011/157251A1, DE 10 2004 060432 A1, DE 10 2008 029 124 A1 sind diesbezüglich kameragestützte Systeme bekannt.

Es ist die Aufgabe der vorliegenden Erfindung, ein Verfahren sowie eine Steuereinheit und ein Fahrzeug zu schaffen, durch die eine unnötige Beschleunigung des Fahrzeugs im Bereich vor einer Ausfahrt zuverlässig vermieden wird.

Die Aufgabe wird ausgehend von einem Verfahren gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Eine entsprechende Einrichtung und eine entsprechendes Fahrzeug werden in den Ansprüchen 9 beziehungsweise 12 beschrieben.

Die Erfindung schließt die technische Lehre ein, dass eine Ausfahrt in einem vorausgesagten Fahrweg des Fahrzeugs mittels der Sensorik erkannt wird, und die durch den Tempomaten einsteuerbare Geschwindigkeit auf einen Wert unterhalb der Vorgabegeschwindigkeit begrenzt wird.

Die Geschwindigkeitsbegrenzung ist dabei durchführbar durch eine Beschleunigungsbegrenzung. Insbesondere wenn die Geschwindigkeit konstant gehalten werden soll, ist es möglich die Beschleunigung komplett zu unterdrücken. Gemeint ist hier jeweils nur die durch ein Fahrerassistenzsystem, wie dem Tempomaten, einsteuerbare Geschwindigkeit oder Beschleunigung. Die direkte Regulierung der Geschwindigkeit durch den Fahrer, also durch Betätigung beispielsweise von Gas- oder Bremspedal, bleibt von diesem Verfahren vollkommen unberührt.

Ein Vorteil des Verfahrens kann insbesondere darin gesehen werden, dass durch die unmittelbare sensorische Erkennung der Ausfahrt im vorausgesagten Fahrweg eine besonders hohe Zuverlässigkeit erreicht wird. Der vorausgesagte Fahrweg wird dabei üblicherweise von einem Fahrerassistenzsystem berechnet und entspricht prinzipiell dem Verlauf der gegenwärtig gefahrenen Spur. Die Erkennung der Ausfahrt kann je nach Streckenführung und Beschilderung bis zu hunderten Metern im Voraus geschehen.

Gemäß einer vorteilhaften Ausführungsform des Verfahrens wird die durch den Tempomaten einsteuerbare Geschwindigkeit auf die Sicherheitsgeschwindigkeit begrenzt.

Der Vorteil ist hierbei vor allem darin zu sehen, dass diese Begrenzung der Geschwindigkeit gleichzusetzen ist mit einer kompletten Unterdrückung von Beschleunigung. Diese Methode ist technisch besonders einfach umzusetzen, und vermeidet gänzlich einen unnötigen Beschleunigungsvorgang, der sowohl einen zusätzlichen Treibstoffverbrauch als auch ein subjektiv als unangenehm empfundenes unstetiges Fahrgefühl verursacht.

Eine bevorzugte Ausführungsform der Erfindung sieht vor, dass Eigenschaften oder Parameter der Ausfahrt mittels der Sensorik erkannt werden, und ausgewertet werden, und mittels der Parameter eine Maximalgeschwindigkeit errechnet wird, und die durch den Tempomaten einsteuerbare Geschwindigkeit auf diese Maximalgeschwindigkeit begrenzt wird.

Der Vorteil dieser besonders bevorzugten Ausführungsform besteht darin, dass es möglich ist, durch geometrische Parameter beispielsweise die Breite oder den Krümmungsradius der Ausfahrt sensorisch, also beispielsweise durch Kamera oder Radar, zu erfassen, und anhand dessen eine Maximalgeschwindigkeit zu errechnen, mit der das Fahrzeug die Ausfahrt gefahrlos passieren kann. Dadurch wird insbesondere verhindert, dass das Fahrzeug im Verlauf der Ausfahrt abgebremst werden muss, was letztendlich einen ineffektiven Treibstoffverbrauch und einen vermeidbaren Verschleiß der Bremsen verhindert.

Eine ganz besonders bevorzugte Ausführungsform der Erfindung sieht vor, dass vor dem Spurwechsel durch den Tempomaten in Form eines Abstandsregeltempomaten eine Sicherheitsgeschwindigkeit zur Einhaltung eines Sicherheitsabstandes zu einem direkt vorausfahrenden Hindernisfahrzeug eingesteuert wird.

Vorteilhaft hieran ist vor allem, dass somit eine für den Fernverkehr besonders typische Situation, bei welcher vor Verlassen einer Fernstraße über eine Ausfahrt einem langsameren Hindernisfahrzeug, wie beispielsweise einen Lastkraftwagen, gefolgt wird, im Hinblick auf Treibstoffverbrauch und Verschleiß optimiert wird.

Eine Verbesserung der Erfindung sieht vor, dass anschließend die Begrenzung der durch den Tempomaten einsteuerbaren Geschwindigkeit aufgehoben wird, sobald eine davon unabhängige Geschwindigkeitsbegrenzung aufgehoben wird.

Der Vorteil hierbei ist vor allem darin zu sehen, dass dadurch eine unnötige Verlangsamung des Fahrzeuges verhindert wird, wenn die mittels der Sensorik erkannte Ausfahrt beispielsweise Teil einer Autobahnkreuzung ist, also gleichzeitig eine Auffahrt auf eine andere Fernstraße bildet oder dort hinein mündet. Die unabhängige Geschwindigkeitsbegrenzung wird dabei vorzugsweise von einem Kurvengeschwindigkeitsbegrenzer, der Teil eines Fahrerassistenzsystems ist, vorgegeben. Wenn nun das Fahrzeug von einer ersten Fernstraße über die gekrümmte Ausfahrt und die weiterhin gekrümmte Auffahrt auf eine zweite Fernstraße gelangt ist, so würde ein Kurvengeschwindigkeitsbegrenzer, der beispielsweise in der Auffahrt aktiv war, bei Erreichen der zweiten Fernstraße deaktiviert werden, wodurch die durch den Kurvengeschwindigkeitsbegrenzer erzwungene Geschwindigkeitsbegrenzung aufgehoben wird. Dann wird dann gemäß dieser Ausführungsform der Erfindung auch die Geschwindigkeitsbegrenzung des Tempomaten aufgehoben, so dass der Fahrer nicht zur erneuten Beschleunigung in die automatische Geschwindigkeitsregulierung eingreifen muss.

Eine weitere Ausführungsform der Erfindung sieht vor, dass die Begrenzung der durch den Tempomaten einsteuerbaren Geschwindigkeit aufgehoben wird, wenn eine Fernstraße im Fahrweg des Fahrzeugs erkannt wird.

Dieses Verfahren, welches insbesondere mit der zuvor genannten Verbesserung kombinierbar ist, besitzt den Vorteil, dass die Geschwindigkeitsbegrenzung bei Eintritt auf eine Fernstraße nicht unnötig aufrecht erhalten wird. Die Erkennung der Fernstraße kann dabei wie die Erkennung der Ausfahrt mittels der Sensorik, also beispielsweise per Kamera und digitaler Bilderkennung, oder auch über ein Navigationssystem beispielsweise mit Hilfe von GPS erfolgen.

Eine besonders bevorzugte Ausführungsform der Erfindung sieht vor, dass die Ausfahrt mittels einer Sensorik in Form mindestens einer Kamera oder Stereokamera erkannt wird.

Eine solche Kamera, die beispielsweise auch zur Erkennung von Spurwechseln eingesetzt werden kann, ermöglicht eine besonders zuverlässige Erkennung sowohl von Eigenschaften der Straße, als auch der Spurmarkierungen und der Straßenbegrenzung, sowie von Beschilderung, die auf eine Ausfahrt hinweist. Dadurch lässt sich eine Ausfahrt oder Abfahrt schon mehrere hundert Meter vor Erreichen einer darin angeordneten Kurve oder Geschwindigkeitsbegrenzungsbeschilderung erkennen, welche eine Geschwindigkeitsregulierung zwingend erfordern würde.

Weiter verbessert wird die Erfindung dadurch, dass die Ausfahrt mittels zusätzlicher Sensorik in Form eines Radars oder einer Lidar-Einheit durch Sensorfusion erkannt wird.

Der Vorteil besteht dabei vor allem darin, dass die Genauigkeit und auch die Zuverlässigkeit der Erkennung gegenüber einer rein visuellen Erkennung per Kamera stark erhöht werden. Ein Radar oder Lidar liefert dreidimensionale Informationen, die mittels Analyse einer durch eine einzelne Kamera, also ein einzelnes Objektiv, gewonnenen Abbildung nur abgeschätzt werden können. Eine Stereokamera liefert zwar ebenfalls teilweise dreidimensionale Informationen, die Genauigkeit der Erkennung dieser Informationen kann durch kombinierte Auswertung mit einem Radar oder Lidar aber auch weiter verbessert werden.

Weitere die Erfindung verbessernde Maßnahmen werden nachstehend gemeinsam mit der Beschreibung eines bevorzugten Ausführungsbeispiels der Erfindung anhand der vier Figuren näher dargestellt.

Es zeigen
- Figur 1: eine schematische Darstellung eines Bereichs vor einer Autobahnausfahrt mit einem Fahrzeug mit aktiviertem Abstandsregeltempomat,
- Figur 2: eine schematische Darstellung des Spurwechsels und des vorausgesagten Fahrwegs des Fahrzeugs,
- Figur 3: eine schematische Darstellung der Erkennung der Ausfahrt mittels Sensorfusion und
- Figur 4: eine schematische Darstellung der Erkennung des Wiedereintritts auf eine anknüpfende Fernstraße mittels Sensorfusion.

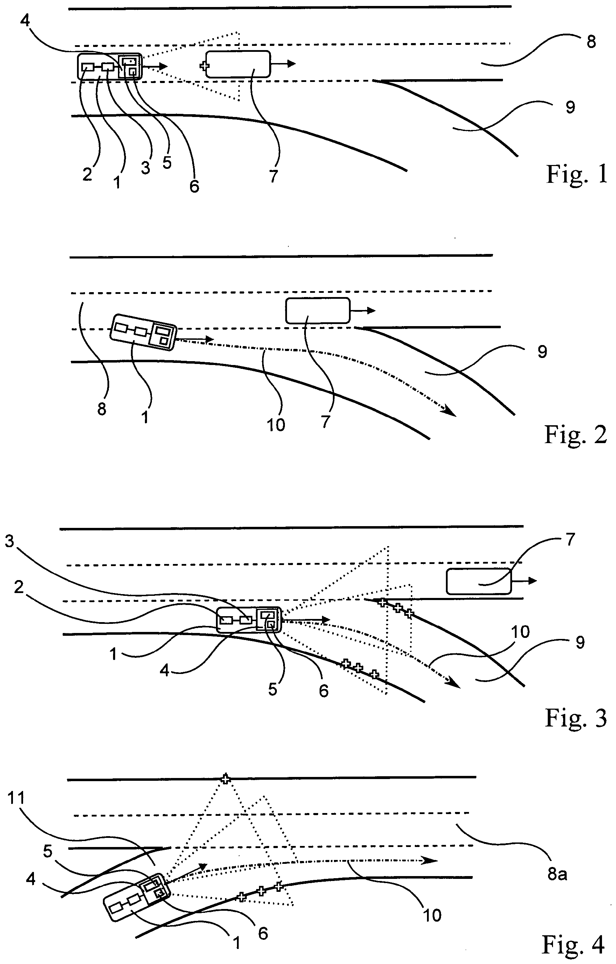

Gemäß Figur 1 verfügt ein Fahrzeug 1 über einen Tempomaten 2 zur Geschwindigkeitseinsteuerung. Der Tempomat 2 kommuniziert dabei über eine Steuereinheit 3 mit einer Sensorik 4, welche einen Radar 5 und eine Kamera 6 umfasst, welche in Fahrtrichtung gerichtet sind. Die Kamera 6 bildet dabei elektromagnetische Strahlung aus dem optischen Spektrum ab, während der Radar 5 Strahlung in Millimeterwellenbereich aussendet und aufnimmt.

Das Fahrzeug 1 folgt einem Hindernisfahrzeug 7 mit einem Sicherheitsabstand, der von dem Tempomaten 2 in Form eines Abstandsregeltempomaten durch Einsteuerung einer Sicherheitsgeschwindigkeit eingehalten wird. Der Abstand zum Hindernisfahrzeug 7 wird dabei durch Sensorik 4 in Form des Radars 5 gemessen.

Ein für die Messung relevanter Datenpunkt, der beispielsweise durch Streuung oder Reflektion entsteht, ist dabei exemplarisch mit einem Plus-Zeichen symbolisiert. Der Kegel, der das Sichtfeld der Sensorik 4 begrenzt, ist mit einem gepunkteten Dreieck schematisiert.

In Figur 2 ist der Spurwechsel des Fahrzeuges 1 dargestellt, welches von der Fernstraße 8 auf eine Ausfahrt 9 wechselt. Insbesondere wird dadurch das Hindernisfahrzeug 7 nicht weiter verfolgt. Dieses verschwindet also als Hindernis.

Die Steuereinheit 3 berechnet dabei den vorausgesagten Fahrweg 10 des Fahrzeugs, welcher auf die Ausfahrt 9 führt.

Gemäß Figur 3 befindet sich das Fahrzeug 1 auf einer Spur, die auf die Ausfahrt 9 führt. Die Ausfahrt 9 wird dabei mittels der Sensorik 4 aus Entfernung erkannt. Zur Erkennung wird dabei eine Sensorfusion eingesetzt, wobei die graphisch mit Plus-Zeichen markierten Messpunkte der Kamera 6 und des Radars 5 miteinander abgeglichen werden.

Durch die mit der Sensorik 4 kommunizierende Steuereinheit 3 wird die Information, dass eine Ausfahrt im vorausgesagten Fahrweg 10 liegt, ausgewertet und an den Tempomaten 2 weitergegeben. Dieser wird dann daran gehindert, das Fahrzeug 1 zu beschleunigen, obwohl das Hindernisfahrzeug 7 kein Hindernis mehr darstellt. Das Fahrzeug 1 fährt folglich mit einer konstanten Geschwindigkeit über die Ausfahrt 9 und muss insbesondere nicht durch den Fahrer abgebremst werden.

Gemäß Figur 4 biegt das Fahrzeug 1 unmittelbar anschließend von einer Auffahrt 11, die an die hier nicht weiter dargestellte Ausfahrt 9 angeknüpft ist, auf eine Fernstraße 8a ein. Durch Sensorfusion von Kamera 6 und Radar 5 wird die Fernstraße 8a als solche erkannt, und dadurch die zuvor aktivierte Geschwindigkeitsbegrenzung wieder deaktiviert, so dass der Tempomat 2 das Fahrzeug 1 auf die Vorgabegeschwindigkeit beschleunigen kann.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass statt eines Radars ein Lidar oder statt einer Kamera eine Stereokamera eingesetzt wird. Auch sind die Figuren nur als Schema zu verstehen. Insbesondere die tatsächlichen Abstände, beispielsweise zwischen Fahrzeug und Ausfahrt bei Erkennung derselben, können weit höher sein.

### Bezugszeichenliste

- 1: Fahrzeug
- 2: Tempomat
- 3: Steuereinheit
- 4: Sensorik
- 5: Radar
- 6: Kamera
- 7: Hindernisfahrzeug
- 8, 8a: Fernstraße
- 9: Ausfahrt
- 10: Fahrweg
- 11: Auffahrt

## Patentansprüche

1. Verfahren zur Geschwindigkeitsregulierung eines Fahrzeugs (1), bei welchem mit einem Tempomaten (2) eine Geschwindigkeit eingesteuert wird und mit in Fahrtrichtung gerichteter Sensorik (4) mittels räumlicher Auflösung elektromagnetischer Strahlung eine Umgebung erkannt wird, umfassend Schritte, bei denen
- eine Vorgabegeschwindigkeit definiert wird, und
- durch den Tempomaten (2) eine gegenüber der Vorgabegeschwindigkeit reduzierte Sicherheitsgeschwindigkeit eingesteuert wird, und
- durch die Sensorik (4) ein Spurwechsel des Fahrzeugs (1) erkannt wird,
- anschließend eine Ausfahrt (9) in einem vorausgesagten Fahrweg (10) des Fahrzeugs (1) mittels der Sensorik (4) erkannt wird,
**dadurch gekennzeichnet, dass**
- die durch den Tempomaten (2) einsteuerbare Geschwindigkeit auf einen Wert unterhalb der Vorgabegeschwindigkeit begrenzt wird, derart, dass die Begrenzung der Geschwindigkeit durch eine Beschleunigungsbegrenzung erfolgt.

2. Verfahren nach Anspruch 1,
**dadurch gekennzeichnet, dass** die durch den Tempomaten (2) einsteuerbare Geschwindigkeit auf die Sicherheitsgeschwindigkeit begrenzt wird.

3. Verfahren nach einem der vorherigen Ansprüche,
**dadurch gekennzeichnet, dass** geometrische Eigenschaften der Ausfahrt (9) mittels der Sensorik (4) erkannt werden, und dahingehend ausgewertet werden, dass daraus eine Maximalgeschwindigkeit errechnet wird, und die durch den Tempomaten (2) einsteuerbare Geschwindigkeit auf diese Maximalgeschwindigkeit begrenzt wird.

4. Verfahren nach einem der vorherigen Ansprüche,
**dadurch gekennzeichnet, dass** vor dem Spurwechsel durch den als Abstandsregeltempomaten ausgebildeten Tempomaten (2) die Sicherheitsgeschwindigkeit zur Einhaltung eines Sicherheitsabstandes zu einem direkt vorausfahrenden Hindernisfahrzeug (7) eingesteuert wird.

5. Verfahren nach einem der vorherigen Ansprüche,
**dadurch gekennzeichnet, dass** anschließend die Begrenzung der durch den Tempomaten (2) einsteuerbaren Geschwindigkeit aufgehoben wird, sobald eine davon unabhängige Geschwindigkeitsbegrenzung aufgehoben wird.

6. Verfahren nach einem der vorherigen Ansprüche,
**dadurch gekennzeichnet, dass** anschließend die Begrenzung der durch den Tempomaten (2) einsteuerbaren Geschwindigkeit aufgehoben wird, wenn eine Fernstraße (8a) im Fahrweg (10) des Fahrzeugs (1) erkannt wird.

7. Verfahren nach einem der vorherigen Ansprüche,
**dadurch gekennzeichnet, dass** die Ausfahrt (9) kameragestützt erkannt wird.

8. Verfahren nach Anspruch 7,
**dadurch gekennzeichnet, dass** die Ausfahrt (9) durch radargestützte oder lidargestützte Sensorfusion erkannt wird.

9. Einrichtung zur Geschwindigkeitsregulierung eines Fahrzeugs (1) mit einer Steuereinheit (3), die dazu ausgebildet ist, ein Verfahren nach einem der Ansprüche 1 bis 8 durchzuführen.

10. Einrichtung nach Anspruch 9,
**dadurch gekennzeichnet, dass** die Sensorik (4) zur Erkennung der Ausfahrt (9) mindestens eine Kamera (6) umfasst, deren Bildsignale der Steuereinheit (3) zugehen.

11. Einrichtung nach Anspruch 9 oder 10,
**dadurch gekennzeichnet, dass** die Sensorik (4) zur Erkennung der Ausfahrt (9) mindestens ein Radar (5) oder Lidar umfasst, deren Signale der Steuereinheit (3) zugehen.

12. Fahrzeug (1) mit einer Einrichtung nach Anspruch 9.

## Claims

1. Method for regulating the speed of a vehicle (1), in which, a speed is set by means of a Tempomat cruise control system (2), and with a sensor system (4) directed in the travel direction which recognises an environment by the spatial resolution of electromagnetic radiation, the said method comprising steps in which:
- a specified speed is defined, and
- by means of the Tempomat system (2) a safe speed lower compared with the said specified speed is set, and
- by means of the sensor system (4) a lane change of the vehicle (1) is recognised,
- and then
an exit ramp (9) in a predicted travel route (10) of the vehicle (1) is recognised by the sensor system (4),
**characterised in that**
- the speed that can be set by the Tempomat system (2) is restricted to a value lower than the specified speed in such manner that the speed is restricted by limiting an acceleration.

2. Method according to Claim 1,
**characterised in that** the speed that can be set by the Tempomat system (2) is limited to the said safe speed.

3. Method according to either of the preceding claims,
**characterised in that** geometrical features of the exit ramp (9) are recognised by the sensor system (4) and are evaluated, with the effect that a maximum speed is calculated therefrom, and the speed that can be set by the Tempomat system (2) is limited to the said maximum speed.

4. Method according to any of the preceding claims,
**characterised in that** before the lane change, the safe speed for maintaining a safe distance from an obstructive vehicle (7) driving directly in front is set by the Tempomat system (2), which is in the form of a distance-regulating Tempomat system.

5. Method according to any of the preceding claims,
**characterised in that** thereafter, the limitation of the speed that can be set by the Tempomat system (2) is cancelled as soon as a speed limitation which is independent thereof is lifted.

6. Method according to any of the preceding claims,
**characterised in that** thereafter, the limitation of the speed that can be set by the Tempomat system (2) is cancelled if a motorway (8a) is recognised in the travel route (10) of the vehicle (1).

7. Method according to any of the preceding claims,
**characterised in that** the exit ramp (9) is recognised with the help of a camera.

8. Method according to Claim 7,
**characterised in that** the exit ramp (9) is recognised by radar-supported or lidar-supported sensor fusion.

9. Device for regulating the speed of a vehicle (1), comprising a control unit (3) designed to implement a method according to any of Claims 1 to 8.

10. Device according to Claim 9,
**characterised in that** the sensor system (4) for recognising the exit ramp (9) comprises at least one camera (6), whose image signals are sent to the control unit (3).

11. Device according to Claims 9 or 10,
**characterised in that** the sensor system (4) for recognising the exit ramp (9) comprises at least one radar (5) or lidar, whose signals are sent to the control unit (3).

12. Vehicle (1) with a device according to Claim 9.

## Revendications

1. Procédé de régulation de la vitesse d'un véhicule (1), dans lequel on commande une vitesse par une installation (2) de régulation de la vitesse et, par un dispositif (4) de détection dirigé dans le sens de marche, on détecte un environnement au moyen d'une résolution spatiale d'une rayonnement électromagnétique, comprenant les stades dans lesquels
- on définit une vitesse de prescription, et
- par l'installation (2) de régulation de la vitesse, on commande une vitesse de sécurité réduite par rapport à la vitesse de prescription, et
- par le dispositif (4) de détection, on détecte un changement de voie du véhicule (1),
- ensuite
on détecte au moyen du dispositif (4) de détection une sortie (9) du véhicule (1) d'une voie (10) de circulation prédite, **caractérisé en ce que**
- on limite la vitesse, pouvant être commandée par l'installation (2) de régulation de vitesse, à une valeur inférieure à la vitesse de prescription de manière à ce que la limitation de la vitesse ait lieu par une limitation de l'accélération.

2. Procédé suivant la revendication 1,
**caractérisé en ce que** l'on limite à la vitesse de sécurité la vitesse pouvant être commandée par l'installation (2) de régulation de la vitesse.

3. Procédé suivant l'une des revendications précédentes, **caractérisé en ce que** l'on détecte des propriétés géométriques de la sortie (9) au moyen du dispositif (4) de détection et on les exploite de manière à en calculer une vitesse maximum et on limite à la vitesse maximum la vitesse pouvant être commandée par l'installation (2) de régulation de la vitesse.

4. Procédé suivant l'une des revendications précédentes, **caractérisé en ce que**, avant le changement de voie, on commande, par l'installation (2) de régulation de la vitesse constituée sous la forme d'une installation de régulation de la vitesse à régulation de distance, la vitesse de sécurité pour maintenir une distance de sécurité à un véhicule (7) faisant obstacle immédiatement précédent.

5. Procédé suivant l'une des revendications précédentes, **caractérisé en ce qu'**ensuite on fait cesser la limitation de la vitesse pouvant être commandée par l'installation (2) de régulation de la vitesse, dès qu'une limitation de vitesse, qui en est indépendante, a cessé.

6. Procédé suivant l'une des revendications précédentes, **caractérisé en ce qu'**ensuite on fait cesser la limitation de la vitesse pouvant être commandée par l'installation (2) de régulation de la vitesse, si l'on détecte une file (8a) à distance dans la voie (10) de circulation du véhicule (1).

7. Procédé suivant l'une des revendications précédentes, **caractérisé en ce que** l'on détecte la sortie (9) à l'aide d'une caméra.

8. Procédé suivant la revendication 7,
**caractérisé en ce qu'**on détecte la sortie (9) par une combinaison de capteurs assistée par radar ou par lidar.

9. Dispositif de régulation de la vitesse d'un véhicule (1), comprenant une unité (3) de commande, qui est constituée pour effectuer un procédé suivant l'une des revendications 1 à 8.

10. Dispositif suivant la revendication 9,
**caractérisé en ce que** le dispositif (4) de détection pour la détection de la sortie (9) comprend au moins une caméra (6), dont les signaux d'images sont envoyés à l'unité (3) de commande.

11. Dispositif suivant la revendication 9 ou 10,
**caractérisé en ce que** le dispositif (4) de détection pour la détection de la sortie (9) comprend au moins un radar (5) ou un lidar, dont les signaux sont envoyés à l'unité (3) de commande.

12. Véhicule (1) ayant un dispositif suivant la revendication 9.
